# EUROPEAN PATENT SPECIFICATION

(11) **EP 4 105 622 B1**
(45) Date of publication and mention of the grant of the patent: **13.12.2023**
(21) Application number: 21305816.7
(22) Date of filing: 15.06.2021
(51) Int. Cl.: G01K 1/143, G01K 1/08, G01K 1/16

(54) **TEMPERATURE SENSOR DEVICE WITH INSULATING HOUSING**
TEMPERATURSENSORVORRICHTUNG MIT ISOLIERGEHÄUSE
DISPOSITIF DE CAPTEUR DE TEMPÉRATURE COMPRENANT UN BOÎTIER D'ISOLATION

(43) Date of publication of application: 21.12.2022
(73) Proprietor: TE Connectivity Sensors France, 31027 Toulouse Cedex 3 (FR); Tyco Electronics Hungary Kft, 2500 Esztergom (HU)
(72) Inventor: VENET, Bastien, 77700 Bailly-Romainvilliers (FR); PECQUET, Nicolas Christopher, 77700 Bailly-Romainvilliers (FR); DA CRUZ, Alexandra, 77700 Bailly-Romainvilliers (FR); WAFO, Paul, 31027 Toulouse (FR); TREXLER, David, 2500 Esztergom (HU)
(74) Representative: Grünecker Patent- und Rechtsanwälte PartG mbB

(56) References cited:
- CN-U- 212 871 506
- JP-A- H01 248 031

## Description

### Field of Invention

The present invention relates to a temperature sensor device for sensing the temperature of a surface of an object and, in particular, a temperature sensor device comprising a housing for thermally insulating a measuring surface of the temperature sensor device from an environment of the object.

### Background of the invention

Temperature sensors are of use in a great variety of applications including, for example, automotive applications. Temperature sensors can, for example, be used in the context of industrial condition monitoring or for controlling the operation of combustion engines and means operatively connected therewith or as windshield sensing devices installed in vehicles for the purpose of automatically controlling the heating, ventilation, air conditioning and operation of the windshield wiper.

For allowing a precise and reliable monitoring of the temperature of (a surface of) an object the sensor of the sensing device has to be reliably kept in constant contact with the surface of the object and often has to withstand mechanical shocks and vibrations over the entire lifetime. Further, it must be avoided that the temperature measurement is affected by the temperature of an environment of the object.

In the art, sensor devices comprising printed circuit boards (PCBs) are known. For example, a thermistor is attached to a flexible polyimide film. One end of the polyimide film is connected to a PCB and another end, on which the thermistor is attached, is attached to the object the temperature of which has to be measured. In the art, thermal insulation means are provided in order to reduce the influence of the environment of the object on the actual temperature measurement. The known thermal insulation means, for example, insulation sleeves, are relatively bulky and subject to severe deterioration by aging effects (for example, caused by vibration, thermal influences, solar radiation, humidity, etc., in particular, when the thermal insulation means comprise organic materials.

JP H01 248031 A discloses a ground surface temperature sensor comprising an outer coating with a semi-cylindrical shape and spaced apart from an inner coating with a semi-cylindrical shape, and the inner coating forming an open portion inside end walls of the same.

In view of the above, it is an object of the present invention to provide a temperature sensor device that can be easily manufactured at low costs and still allows for a reliable and permanent sensing operation facilitated by thermal insulation from the environment of an object the temperature of which has to be measured by the temperature sensor device.

### Description of the Invention

The present invention addresses the above-mentioned object by providing a temperature sensor device for sensing the temperature of a (curved or planar) surface of an object. The object is not limited. For example, it may be a pipe or another object comprising a curved surface or it may be an object exhibiting a more or less planar surface. The temperature sensor device comprises a temperature sensor element, in particular, being or comprising a thermistor (or a resistive temperature detector or a silicon-based semi-conductor temperature sensor or a thermocouple). Further, the temperature sensor device comprises a measuring cavity, a housing and a measuring surface (that may be part of the housing) configured for contacting the surface of the object.

The housing or parts of the same is/are configured for thermally insulating the measuring cavity / temperature sensor element / measuring surface of the temperature sensor element from an environment of the object (for example, air surrounding the object). In addition, the housing can provide for protection against mechanical and chemical attacks. The housing comprises an outer shell and at least one inner shell and an outer cavity formed between the outer shell and the at least one inner shell that are configured for thermally insulating the measuring cavity / temperature sensor element / measuring surface from an environment of the object.

The outer shell is closer to an environment of the temperature sensor device than the inner shell and in direct contact with the environment. The inner shell is closer to the temperature sensor element than the outer shell. The outer shell and the inner shell may be arranged concentrically to each other. In principle, a plurality of inner shells separated from each other by cavities may be comprised in the temperature device. Particularly, the temperature sensor device may be configured such that it does not comprise an additional insulation material/means for thermally insulating the measuring surface of the temperature sensor device from the environment of the object.

The housing further comprises a measuring cavity shell (for example, made of or comprising a metal material) and the measuring cavity is formed between the measuring cavity shell and the measuring surface. The housing further comprises an inner cavity formed between the at least one inner shell and the measuring cavity shell. Thus, the (housing of the) temperature sensor device comprises at least three cavities one of which (the measuring cavity) is provided for the temperature sensor element that is covered by the housing and the other two cavities (the inner and outer cavities) being formed over the measuring cavity shell and being provided for thermal management in the housing. In such a configuration the inner shell can advantageously act as a thermal convection/radiation barrier between the inner cavity and the outer cavity. The outer shell, the inner shell and the measuring cavity shell may be arranged peripherally and, in particular, concentrically to each other.

The thus defined configuration can be relatively easily and cost-efficiently produced with a very compact design. A long-term reliable temperature measurement operation can be achieved. The housing can, for example, be made of one integrally formed single piece. In particular, the housing provides for mechanical and chemical protection as well as thermal insulation. The temperature sensor device comprising such a housing is robust against mechanical perturbations, for example, in the form of vibrations and high surrounding temperatures or chemically aggressive environments.

It is noted that the temperature sensor device may be connected to a printed circuit board (PCB) comprising a measurement and control circuitry for processing data sensed by the temperature sensor element and for controlling the temperature sensor device. In principle, wired and wireless configurations with or without PCB may be implemented. In principle, the temperature sensor device may also be used in combination with one or more sensors configured for sensing measurands different from temperature.

### According to an embodiment,

The inner cavity and/or the outer cavity may be filled with a gas or a material of less thermal conductivity than the thermal conductivities of the outer shell and the inner shell for insulation purposes. Alternatively, the inner cavity and/or the outer cavity may be applied to vacuum. According to a particular embodiment, the measuring cavity and the inner cavity are filled with different materials.

The outer shell and/or the inner shell may be made of or comprise a metal material (for example, stainless steel, titanium, aluminum alloy, copper alloy, an iron alloy as maraging steel or an austenitic nickel-chromium-based superalloy - Inconel^{®}) in order to provide for a high thermal conductivity. For example, the outer shell and the inner shell are made of the same metal material. Alternatively, they may be made of different materials. The above-mentioned measuring cavity shell may also be made of a metal material (for example, stainless steel, an iron alloy as maraging steel, or an austenitic nickel-chromium-based superalloy - Inconel^{®}) and, particularly, the same material as the outer and inner shells. Alternatively, the measuring cavity shell is made of a material different from the material of the outer and inner shells. According to an embodiment, the measuring cavity shell and the outer shell or the measuring cavity shell, the inner shell and the outer shell are made of one integrally formed single piece. For example, the thickness of one or more of the measuring cavity shell, the inner shell and the outer shell is in the range of 0.1 to 1.5 mm.

According to an embodiment of the inventive temperature sensor device, the inner shell is in (direct) contact with the measuring surface. For example, the inner shell is (directly) formed on or integrally with the measuring surface. According to an embodiment, the measuring surface and the outer shell are made of one single piece. According to an embodiment, the measuring cavity shell, the inner shell, the outer shell and the measuring surface are made of one single piece. Due to the contact of the inner shell with the measuring surface heat can be conducted from or to the measuring surface and, thus, temperature gradients over the measuring cavity defined by the measuring cavity shell and the inner cavity defined by the measuring cavity shell and the inner shall can advantageously be reduced.

In principle, the geometric shapes of the outer shell, inner shell and measuring cavity shells are not limited. It might be advantageous, for example, in terms of a compact design and mechanical stability, to form the outer shell and/or the inner shell and/or the measuring cavity shell with a less than full spherical or hemispherical shape (with a full or partial hemisphere geometry). Depending on the actual application of the temperature sensor device at least partially rectangular shapes might also be considered suitable.

The measuring surface of the sensor element may have a plane shape or a curved shape as it is appropriate for matching the geometric shape of the object the surface temperature of which is to be determined by the temperature sensor device.

As already mentioned above, the temperature sensor device can be relatively easily manufactured with a compact size. For example, the outer shell and the inner shell may be manufactured by 3D metal printing, for example, Direct Metal Laser Sintering (DMLS), or injection molding or machining, in general. The outer shell and the inner shell or the outer shell and the inner shell and the measuring cavity shell or the outer shell and the inner shell and the measuring cavity shell and the measuring surface may be integrally formed in one single 3D metal printing step or (metal) injection molding step. In view of this, it is also provided a method of manufacturing a housing for a temperature sensor device comprising 3D metal printing or (metal) injection molding of an outer shell and an inner shell (one or more inner shells) of the housing. Further, it is provided a method of manufacturing temperature sensor device comprising manufacturing a housing for the temperature sensor device comprising 3D metal printing or (metal) injection molding of an outer shell and an inner shell (one or more inner shells) of the housing. Further, it is provided a method of manufacturing temperature sensor device comprising manufacturing a housing for the temperature sensor device comprising 3D metal printing or (metal) injection molding of an outer shell and an inner shell (one or more inner shells) of the housing and 3D metal printing or (metal) injection molding of a measuring cavity shell of a temperature sensor element of the temperature sensor device.

All embodiments of the above-described temperature sensor device may advantageously be used in automotive and industrial applications, for example.

Thus, it is provided a combustion engine control means for controlling the operation of a combustion engine and, in particular, the temperature of an exhaust gas produced by the combustion engine, and comprising the temperature sensor device according to one of the above-described embodiments of the inventive temperature sensor device.

Furthermore, it is provided a defogging control means or a wiper operation control means for a motor vehicle comprising a windshield, the defogging control means or the wiper operation control means comprising a humidity sensor device for sensing the humidity of the windshield and the temperature sensor device according to one of the above-described embodiments.

Additional features and advantages of the present invention will be described with reference to the drawing. In the description, reference is made to the accompanying figure that is meant to illustrate embodiments of the invention. It is understood that such embodiments do not represent the full scope of the invention.

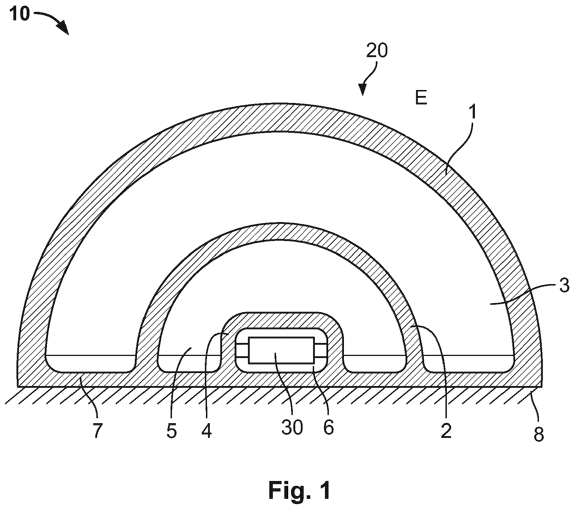

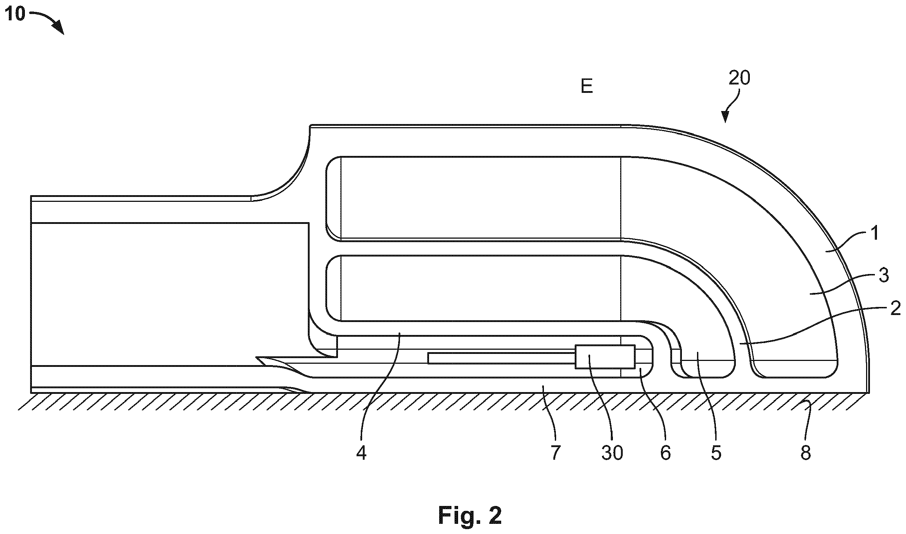

Figures 1 and 2 illustrate an exemplary embodiment of a temperature sensor device comprising a housing with multiple shells according to the present invention.

The present invention provides a temperature sensor device for sensing the temperature of a surface of an object, for example, a pipe or a windshield of a vehicle, wherein the temperature sensor device comprises a housing having multiple shells for thermally insulating a sensor element/measuring surface from an environment of the object. The provided temperature sensor device may be suitably used for sensing a large range of temperatures, for example, from -200 °C to 1000 °C.

Figures 1 and 2 (in longitudinal and cross sectional views, respectively) exemplarily show an embodiment of a temperature sensor device 10 according to the invention. The temperature sensor device 10 shown in Figures 1 and 2 comprises a housing 20. The housing 20 provides protection against pollution and chemical and physical attacks. The housing 20 comprises an outer shell 1 and at least one inner shell 2. An outer cavity 3 is formed between the outer shell 1 and the inner shell 2. Both the outer shell 1 and the inner shell 2 may be made of or comprise a metal material, for example, stainless steel, titanium, aluminum alloy, copper alloy, an iron alloy as maraging steel or an austenitic nickel-chromium-based superalloy - Inconel^{®}. The outer shell 1 and the inner shell 2 may be made of or comprises the same metal material and may be formed in a single manufacturing step, for example, by (powder-based) 3D metal printing. The 3D metal printing may be performed by means of a Direct Metal Laser Sintering (DMLS) device. One or more apertures may be formed in the inner shell 2 in order to remove 3D printing powder after the completion of the forming of the inner shell 2. Alternatively, the housing 20 or the outer shell 1 and the inner shell 2 may be manufactured by (metal) injection molding, for example.

More than one inner shell 2 may be provided that are separated from each other by cavities. The outer shell 1 and/or the inner shell 2 may have a less than full spherical or hemispherical shape (with full or partial hemispheres) that might by advantageous in terms of creating a compact design on the temperature sensor device 10 and mechanical stability. Depending on the actual application of the temperature sensor device rectangular shapes might also be considered suitable.

Further, the temperature sensor device 10 comprises a temperature sensor element 30. The temperature sensor element 30 may comprise or may be a thermistor or a resistive temperature detector or a silicon-based semi-conductor temperature sensor or a thermocouple. The temperature sensor element 30 may have electrically conductive leads to transduce a sensed temperature into an electrical output signal.

An inner cavity 5 is formed between the inner shell 2 and the measuring cavity shell 4. The measuring cavity shell 4 may be made of or comprise a metal material for relatively high thermal conductivity, for example, stainless steel, an iron alloy as maraging steel or an austenitic nickel-chromium-based superalloy - Inconel^{®} and, for example, the same material as the outer shell 1 and the inner shell 2. Particularly, the measuring cavity shell 4 may be manufactured in the same single manufacturing step as the outer shell 1 and the inner shell 2, for example, by (powder-based) 3D metal printing or injection molding. The outer shell 1 and the inner shell 2 and the measuring cavity shell 4 may have less than full spherical or hemispherical shapes (with full or partial hemispheres).

Moreover, the measuring cavity shell 4 defines a measuring cavity 6 the bottom of which is formed by or comprises or is connected to a measuring (sensing) surface 7. The temperature sensor device 10 may be configured for sensing the surface temperature of an object based on the measurement of an electrical current flowing in or an electrical resistance or a voltage provided by a measuring surface 7. In order to sense the surface temperature of an object the measuring surface 7 is in contact (for example, planar contact) with a surface 8 of the object. The measuring surface 7 may be part of the housing 20. It is noted that there is no direct mechanical/thermal contact between the measuring cavity shell 4 and the surface 8 of the object the surface temperature of which is to be measured by the temperature sensor device 10.

The measuring surface 7 may be part of a thermally conductive pad by which the temperature sensor is attached to the object. The geometric shape of the measuring surface 7 may be adapted to the surface of the object the surface temperature of which is to be measured. For example, a planar or curve (convex or concave) measuring surface 7 may be provided. The measuring surface 7 and the outer shell 1 or the measuring surface 7 and the outer shell 1 and the inner shell 2 or the measuring surface 7, the outer shell 1, the inner shell 2 and the measuring cavity shell 4 may be made of one single integrally formed piece.

The housing 20 provides thermal insulation of the measuring cavity 6 / temperature sensor element 30 / measuring surface 7 from an environment E (for example, surrounding air) of the object (and the temperature sensor device 10) such that the measurement of the surface temperature of the object is less affected by the temperature of the environment E (i.e., any temperature offset is significantly reduced by the provision of the housing 20). No additional insulating material/means (in particular, no relatively bulky organic or inorganic insulating means) is needed in addition to the housing 20 shown in Figures 1 and 2 in order to achieve the desired thermal insulation. However, according to particular embodiments, one or more of the measuring cavity 6, the inner cavity 5 and the outer cavity 3 may be filled with some gas or a material of less thermal conductivity than the thermal conductivities of the outer shell 1 and the inner shell 2 or one or more of the measuring cavity 6, the inner cavity 5 and the outer cavity 3 may be applied to vacuum. According to a particular embodiment, the measuring cavity 6 and the inner cavity 5 are filled with different materials. For example, it might be suitable to fill the measuring cavity 6 and the inner cavity 5 with a polymer material, for example, when negative temperatures are to be measured.

In the configuration shown in Figures 1 and 2 the inner shell 2 provides an efficient thermal convection barrier (substantially blocking vertical flow of heat) as well as a thermal radiation barrier (substantially blocking radial flow of heat) between the outer cavity 3 and the inner cavity 5 thereby minimizing temperature gradients in these regions of the temperature sensor device 10 in order to provide for accurate temperature measurements by the temperature sensor device 10.

Particularly, the temperature sensor device 10 can be manufactured relatively simply and at relatively low costs with a compact size. Depending on the choice of the material used for the formation of the outer shell 1 the temperature sensor device 10 can reliably operate in relatively low temperature environments (for example, at temperatures as low as -200 °C) and high temperature environments (with temperatures of some 100 °C or some 1000 °C or more). Further, the temperature sensor device 10 can reliably operate in chemically and physically harsh environments and, in particular, can stand mechanical vibrations. For example, the temperature sensor device 10 can be used for sensing the temperature of exhaust gases of combustion engines of vehicles (via a surface of an object, for example, some pipe, in thermal contact with the exhaust gas).

### Reference Numbers

- 1:: outer shell
- 2:: inner shell
- 3:: outer cavity
- 4:: measuring cavity shell
- 5:: inner cavity
- 6:: measuring cavity
- 7:: measuring surface
- 8:: surface of object
- 10:: temperature sensor device
- 20:: housing
- 30:: temperature sensor element
- E:: environment of object

## Claims

1. Temperature sensor device (10) for sensing the temperature of a surface (8) of an object, comprising:
a temperature sensor element (30), in particular, being or comprising a thermistor;
a measuring cavity (6);
a housing (20); and
a measuring surface (7) configured for contacting the surface (8) of the object;
wherein the housing (20) comprises an outer shell (1), an inner shell (2), and a measuring cavity shell (4), wherein an outer cavity (3) is formed between the outer shell (1) and the inner shell (2) that are configured for thermally insulating the measuring cavity (6) and the measuring surface (7) from an environment (E) of the object, wherein an inner cavity (5) is formed between the inner shell (2) and the measuring cavity shell (4), and wherein the measuring cavity (6) is formed between the measuring cavity shell (4) and the measuring surface (7);
wherein the temperature sensor element (30) is located in the measuring cavity (6); and
wherein the housing (20) is made of one integrally formed single piece.

2. The temperature sensor device (10) according to claim 1, wherein
a) the outer shell (1) and the measuring surface (7) are made of one integrally formed single piece; or
b) the measuring cavity shell (4), the inner shell (2), and the outer shell (1) are made of one integrally formed single piece; or
c) the measuring cavity shell (4), the inner shell (2), the outer shell (1) and the measuring surface (7) are made of one integrally formed single piece.

3. The temperature sensor device (10) according to claim 1, wherein the inner cavity (5) and/or the outer cavity (3) is
a) filled with a gas or a material of less thermal conductivity than the thermal conductivities of the outer shell (1) and the inner shell (2); or
b) applied to vacuum.

4. The temperature sensor device (10) according to one of the preceding claims, wherein the outer shell (1) and/or the inner shell (2) is made of or comprises a metal material.

5. The temperature sensor device (10) according to claim 4, wherein the outer shell (1) and the inner shell (2) are made of the same metal material.

6. The temperature sensor device (10) according to one of the preceding claims, wherein the inner shell (2) is in contact with the measuring surface (7) and/or is integrally formed with the measuring surface (7).

7. The temperature sensor device (10) according to one of the preceding claims, wherein the outer shell (1) and/or the inner shell (2) and/or the measuring cavity shell (4) has an at least partially hemispherical or rectangular shape.

8. The temperature sensor device (10) according to one of the preceding claims, wherein the measuring surface (7) has a plane shape or a curved shape.

9. The temperature sensor device (10) according to one of the preceding claims, wherein the outer shell (1) and the inner shell (2) are manufactured by 3D metal printing or injection molding or machining.

10. A method of manufacturing a temperature sensor device (10) according to one of the preceding claims comprising manufacturing a housing (20) for the temperature sensor device (10) comprising 3D metal printing or injection molding or machining of an outer shell (1) and an inner shell (2) of the housing (20) and, in particular, the measuring shell (4) and the measuring surface (7).

## Patentansprüche

1. Temperatursensorvorrichtung (10) zum Messen der Temperatur einer Oberfläche (8) eines Objekts, die umfasst:
ein Temperatursensorelement (30), das insbesondere ein Thermistor ist oder einen Thermistor umfasst;
einen Messhohlraum (6);
ein Gehäuse (20); und
eine Messoberfläche (7), die dazu ausgebildet ist, die Oberfläche (8) des Objekts zu kontaktieren;
wobei das Gehäuse (20) eine äußere Hülle (1), eine innere Hülle (2) und eine Messhohlraumhülle (4) umfasst, wobei zwischen der äußeren Hülle (1) und der inneren Hülle (2), die dazu ausgebildet sind, den Messhohlraum (6) und die Messoberfläche (7) von einer Umgebung (E) des Objekts thermisch zu isolieren, ein äußerer Hohlraum (3) ausgebildet ist, wobei ein innerer Hohlraum (5) zwischen der inneren Hülle (2) und der Messhohlraumhülle (4) ausgebildet ist, und wobei der Messhohlraum (6) zwischen der Messhohlraumhülle (4) und der Messoberfläche (7) ausgebildet ist;
wobei das Temperatursensorelement (30) sich in dem Messhohlraum (6) befindet; und
wobei das Gehäuse (20) aus einem integral ausgebildeten einzelnen Stück hergestellt ist.

2. Die Temperatursensorvorrichtung (10) gemäß Anspruch 1, wobei
a) die äußere Hülle (1) und die Messoberfläche (7) aus einem integral ausgebildeten einzelnen Stück hergestellt sind; oder
b) die Messhohlraumhülle (4), die innere Hülle (2) und die äußere Hülle (1) aus einem integral ausgebildeten einzelnen Stück hergestellt sind; oder
c) die Messhohlraumhülle (4), die innere Hülle (2), die äußere Hülle (1) und die Messoberfläche (7) aus einem integral ausgebildeten einzelnen Stück hergestellt sind.

3. Die Temperatursensorvorrichtung (10) gemäß Anspruch 1, wobei der innere Hohlraum (5) und/oder der äußere Hohlraum (3)
a) mit einem Gas oder einem Material mit niedrigerer thermischer Leitfähigkeit als der thermischen Leitfähigkeit des äußeren Hohlraums (1) und des inneren Hohlraums (2) gefüllt ist; oder
b) unter Vakuum gesetzt ist.

4. Die Temperatursensorvorrichtung (10) gemäß einem der vorhergehenden Ansprüche, wobei die äußere Hülle (1) und/oder die innere Hülle (2) aus einem Metallmaterial hergestellt ist oder ein Metallmaterial umfasst.

5. Die Temperatursensorvorrichtung (10) gemäß Anspruch 4, wobei die die äußere Hülle (1) und die innere Hülle (2) aus demselben Metallmaterial hergestellt sind.

6. Die Temperatursensorvorrichtung (10) gemäß einem der vorhergehenden Ansprüche, wobei die innere Hülle (2) in Kontakt mit der Messoberfläche (7) steht und/oder integral mit der Messoberfläche (7) ausgebildet ist.

7. Die Temperatursensorvorrichtung (10) gemäß einem der vorhergehenden Ansprüche, wobei die äußere Hülle (1) und/oder die innere Hülle (2) und/oder die Messhohlraumhülle (4) eine zumindest teilweise hemisphärische oder rechteckige Form aufweist.

8. Die Temperatursensorvorrichtung (10) gemäß einem der vorhergehenden Ansprüche, wobei die Messoberfläche (7) eine ebene Form oder eine gekrümmte Form aufweist.

9. Die Temperatursensorvorrichtung (10) gemäß einem der vorhergehenden Ansprüche, wobei die äußere Hülle (1) und die innere Hülle (2) durch 3D-Metalldrucken, Spritzgießen oder Spanen hergestellt sind.

10. Ein Verfahren zur Herstellung einer Temperatursensorvorrichtung (10) gemäß einem der vorhergehenden Ansprüche, das ein Herstellen eines Gehäuses (20) für die Temperatursensorvorrichtung (10) umfasst, das 3D-Metalldrucken oder Spritzgießen oder Spanen-Herstellen einer äußeren Hülle (1) und einer inneren Hülle (2) des Gehäuses (20) und insbesondere der Messhülle (4) und der Messoberfläche (7) umfasst.

## Revendications

1. Dispositif capteur de température (10) pour capter la température d'une surface (8) d'un objet, comprenant :
un élément capteur de température (30), en particulier, qui est ou comprend une thermistance ;
une cavité de mesure (6) ;
un boîtier (20) ; et
une surface de mesure (7) configurée pour entrer en contact avec la surface (8) de l'objet ;
dans lequel le boîtier (20) comprend une coque externe (1), une coque interne (2) et une coque de cavité de mesure (4), dans lequel une cavité externe (3) est formée entre la coque externe (1) et la coque interne (2) qui sont configurées pour isoler thermiquement la cavité de mesure (6) et la surface de mesure (7) d'un environnement (E) de l'objet, dans lequel une cavité interne (5) est formée entre la coque interne (2) et le coque de cavité de mesure (4), et dans lequel la cavité de mesure (6) est formée entre la coque de cavité de mesure (4) et la surface de mesure (7) ;
dans lequel l'élément capteur de température (30) est situé dans la cavité de mesure (6) ; et
dans lequel le boîtier (20) est constitué intégralement d'une seule pièce.

2. Dispositif capteur de température (10) selon la revendication 1, dans lequel
a) la coque externe (1) et la surface de mesure (7) sont constituées intégralement d'une seule pièce ; ou
b) la coque de cavité de mesure (4), la coque interne (2) et la coque externe (1) sont constituées intégralement d'une seule pièce ; ou
c) la coque de cavité de mesure (4), la coque interne (2), la coque externe (1) et la surface de mesure (7) sont constituées intégralement d'une seule pièce.

3. Dispositif capteur de température (10) selon la revendication 1, dans lequel
la cavité interne (5) et/ou la cavité externe (3) est
a) remplie d'un gaz ou d'un matériau dont la conductivité thermique est inférieure à celles de la coque externe (1) et de la coque interne (2) ; ou
b) mise sous vide.

4. Dispositif capteur de température (10) selon l'une des revendications précédentes, dans lequel la coque externe (1) et/ou la coque interne (2) est constituée d'un matériau métallique ou comprend un tel matériau.

5. Dispositif capteur de température (10) selon la revendication 4, dans lequel la coque externe (1) et la coque interne (2) sont constituées du même matériau métallique.

6. Dispositif capteur de température (10) selon l'une des revendications précédentes, dans lequel la coque interne (2) est en contact avec la surface de mesure (7) et/ou est formée intégralement avec la surface de mesure (7) .

7. Dispositif capteur de température (10) selon l'une des revendications précédentes, dans lequel la coque externe (1) et/ou la coque interne (2) et/ou la coque de cavité de mesure (4) présentent une forme au moins partiellement hémisphérique ou rectangulaire.

8. Dispositif capteur de température (10) selon l'une des revendications précédentes, dans lequel la surface de mesure (7) présente une forme plane ou une forme courbe.

9. Dispositif capteur de température (10) selon l'une des revendications précédentes, dans lequel la coque externe (1) et la coque interne (2) sont fabriquées par impression métallique en 3D, par moulage par injection ou par usinage.

10. Procédé de fabrication d'un dispositif capteur de température (10) selon l'une des revendications précédentes, comprenant la fabrication d'un boîtier (20) pour le dispositif capteur de température (10), comportant l'impression métallique en 3D, le moulage par injection ou l'usinage d'une coque externe (1) et d'une coque interne (2) du boîtier (20) et, en particulier, de la coque de mesure (4) et de la surface de mesure (7).
